# EUROPEAN PATENT APPLICATION

(11) **EP 3 421 115 A2**
(43) Date of publication of application: **02.01.2019**
(21) Application number: 18168936.5
(22) Date of filing: 24.04.2018
(51) Int. Cl.: B01D 53/50, B01D 53/56, B01D 53/60

(54) **APPARATUS AND METHOD FOR AMMONIA-BASED DESULFURIZATION**

(30) Priority: 22.09.2017 CN 201710865004; 16.03.2018 US 201815923128
(71) Applicant: Jiangnan Environmental Protection Group Inc., KY1-1002 Grand Cayman (KY)
(72) Inventor: LUO, Jing, NANJING, 211100 (CN); QI, Lifang, NANJING, 211100 (CN); WANG, Jinyong, NANJING, 211100 (CN)
(74) Representative: Bottero, Carlo

(57) **Abstract**

Methods for applying ultra-clean ammonia-based desulfurization technology in carbon capture process. A flue gas, after ultra-clean ammonia-based desulfurization, may be directly fed into a carbon capture device for subsequent processing to realize ultra-clean emissions and the integration of desulfurization and decarbonization. This may significantly reduce the investment and operating costs for carbon capture.

## Description

This application claims the benefits of Chinese Patent Application No. 201710865004.X, filed on September 22, 2017, and U.S. Application Serial No. 15/923,128, filed on March 16, 2018, which are hereby incorporated herein in their entireties.

### TECHNICAL FIELD

The disclosure relates to the field of environmental protection technology, and particularly to a method for applying ultra-clean ammonia-based desulfurization technology in carbon capture process.

### Background

In response to global climate change, the Paris Agreement, signed in December 2015, has made arrangements for global response to climate change to achieve the long-term goal of keeping the global average temperature rise at the level occurring in the pre-industrial period, i.e., below 2C°,and to the extent possible keeping the global average temperature rise below 1.5C°, thereby significantly reducing the risk and impact that the climate change has brought about. Industrial production and thermal electric generation are the major sources of carbon emissions, and the worldwide CO₂ emissions related to power supply and heating account for about 25% of total anthropogenic emissions.

Therefore, carbon emission reduction and carbon capture have been put on the agenda. A reasonable way to reduce carbon emissions is enriching and recovering carbon dioxide and then using the same in downstream product production, agricultural fertilization, oil extraction, and storage so as to reduce carbon dioxide emissions.

Common CO₂-rich gas sources include flue gas, petrochemical and coal chemical by-product gas, shift gas, oil field associated gas, food fermentation gas, lime kiln gas, blast furnace gas, converter gas, etc., of which flue gas accounts for the largest proportion. But as to flue gas, due to the complex composition, low carbon dioxide concentration, and low pressure, the matched flue gas pre-treatment and carbon capture device needs high investment costs and high operating costs, and there are difficulties in industrialization and subsequent commercialization.

Currently, there are three major types of methods of flue gas carbon capture, i.e., pre-combustion capture, post-combustion capture, and oxygen-enriched combustion capture. Post-combustion capture mainly uses organic amine solutions to capture carbon dioxide through absorption capture or membrane processes. Although the emission standard developed for the air pollutants in thermal power plants in China is most stringent worldwide, the emission concentration of SO₂ being 35-100 mg/Nm³, by combining the sulfur dioxide removal processes with organic amines or other flue gas desulfurization processes used worldwide currently with carbon capture, the achievement of SO₂ ultra-clean emissions typically involves high investment costs and high operating costs, typically without fully meeting the removal efficiency requirements, and typically needs to use alkalis such as caustic soda for the second washing desulfurization. However, impurities such as sulfur dioxide in the gases entering the organic amine solutions will react with the organic amines, resulting in loss of the organic amines. The non-specific selectivity of the absorbents on acid gases (CO₂, NOₓ, and SOₓ) in flue gases leads to the additional loss of agents, and typically produces thermally stable salts, such as amino sulfates, at the same time. Liquid wastes typically need to be regularly discharged and liquid waste treatment devices typically need to be provided. In addition, SO₂ will affect the degradation rate of the absorbents, increasing the desorption energy consumption.

Compared to the operating costs of carbon capture devices using industrial exhausted gases as the raw material, the operating costs of carbon capture devices using flue gases as the raw material typically are increased by 10-50%, and the investment costs thereof are typically increased by 15-40%, typically limiting the application of carbon capture technology in the field of flue gas treatment.

Because the front-end desulfurization is not complete, SO₂ contained in the product CO₂ typically affects the application area and sale price of the product. In some products which have high requirements for raw materials, such as food grade carbon dioxide, poly(dimethyl carbonate) and food grade sodium bicarbonate, carbon dioxide with a SO₂ content of more than 1 ppm cannot be used, so that what we can only do is to further refine the product carbon dioxide gas to meet downstream production requirements. As mentioned in Carbon Dioxide Capture Technology and Application Analysis (Gas Purification, No. 6, Vol. 14, 2014), a coal-fired power plant flue gas CO₂ capture test device with an annual recovery capacity of 3000 t was established in Beijing Gaobeidian thermal power plant by Huaneng Group in 2008, which used MEA absorption technology, and in which the CO₂ recovery rate was more than 95%. The test device included CO₂ compression, CO₂ refinement and CO₂ condensation units and was able to provide food grade carbon dioxide with a CO₂ purity of 99.997%, but the investment costs were large, the process flow complex, and the operating costs high.

The membrane process is also a conventional means of carbon capture, but still, a small amount of SO₂ is not removed in the coal-fired wet desulfurized clean flue gas, and the sulfuric acid mist formed by SO₂ in the humid environment easily causes membrane material corrosion. During the membrane absorption process, because the SO₂ molecule has a pair of unshared lone pair electrons, it is easily adsorbed on long chain hydrocarbon organics (e.g., polypropylene and polytetrafluoroethylene materials), affecting the performances of the membrane materials. It is found that SO₂ will compete with CO₂ for adsorption, affecting the CO₂ absorption efficiency of the membranes. In addition, the desulfurized flue gas contains particulates such as gypsum or ammonium sulfate, sulfuric acid mist and incompletely reacted limestone, and thus it is difficult to be effectively captured by the existing WFGD systems, affecting the carbon dioxide capture performance of the membranes.

Chinese Invention Patent Application No. CN 201410329675.0 discloses a method of coal-fired flue gas synchronous desulfurization, denitrification, dust removal and carbon dioxide emission reduction, mainly including the steps of: cyclone dust removal, flue gas heating, carbon reduction desulfurization and denitrification, two-stage cooling and recovery of sulfur, water and dust removal, carbon dioxide capture, and carbon dioxide heating and reduction.

Chinese Invention Patent Application No. CN 201410738815.X discloses a method of ammonia-based flue gas carbon capture and chemical product synthesis, by using a flue gas absorption and synthesis device, using aqueous ammonia to absorb carbon dioxide in flue gas and co-producing sodium bicarbonate.

Chinese Invention Patent Application No. CN 201310070751.6 discloses a method for capturing carbon dioxide in flue gas of a power station boiler and a device therefor, including a purification system, wherein the outlet end of the purification system is connected to the bottom of each of one or more than two desulfurization, denitrification and water washing towers (4) connected in parallel which constitute a desulfurization, denitrification and water washing system, the upper part of the desulfurization, denitrification and water washing towers (4) is provided with a water washing section, and the upper part of the water washing section is connected with a water washing solution storage tank (7); one regeneration tank (21) which is connected with a desulfurization and denitrification solution storage tank (8) is further connected to the bottom of the desulfurization, denitrification and water washing towers (4), and the desulfurization and denitrification solution storage tank (8) is in communication with the underneath of the water washing section of the desulfurization, denitrification and water washing towers (4); the top of the desulfurization, denitrification and water washing towers (4) is connected to the bottom of an absorption tower (5) through a front flue gas heat exchanger (11a); the top of the absorption tower (5) is provided with a water washing section, the underneath of the water washing section of the absorption tower (5) is in communication with an absorption tower washing solution storage tank (9) through a washing solution cooler (11b), and the absorption tower washing solution storage tank (9) is in communication with the top of the absorption tower (5); the outside steam is respectively communicated with a reboiler (19), an amine recovery heater (15) and the front flue gas heat exchanger (11a); the reboiler (19) and the bottom of a regeneration tower (6) are communicated with each other, forming a loop; the bottom of the regeneration tower (6) is respectively connected with the amine recovery heater (15) and a barren/rich liquor heat exchanger (14), and the amine recovery heater (15) is further respectively connected with the middle of the regeneration tower (6) and the purification system; the top of the regeneration tower (6) is connected with a gas-liquid separator (18) successively through a rich liquid heat exchanger (16); the bottom of the absorption tower (5) is successively connected to the rich liquid heat exchanger (16) and the barren/rich liquor heat exchanger (14) and then connected to the upper part of the regeneration tower; and the barren/rich liquor heat exchanger (14) is in communication with the underneath of the water washing section of the absorption tower (5) through a barren liquor heat exchanger (13). The process still needs to provide a purification system before carbon capture. The process flow is complex, the investment costs are high, and the operating costs are high.

Chinese Invention Patent Application No. CN 201420262823.7 discloses an oxygen-enriched combustion and carbon dioxide capture system, including an oxygen-enriched combustion system, a boiler system and a carbon dioxide capture system, wherein the carbon dioxide capture device includes a carbon dioxide refining unit.

Chinese Invention Patent Application No. CN 201110039363.2 discloses a system of normal pressure ammonia-based capture and absorption of sulfur dioxide and carbon dioxide and a process therefor, wherein a dedusted coal-fired power plant flue gas is drawn into the first heat exchanger through the draught fan so that its temperature is decreased by the first heat exchanger to the temperature required by the production process; then the flue gas enters the sulfur dioxide absorption tower from its bottom, and the dilute aqueous ammonia absorption solution within the dilute aqueous ammonia storage tank capable of capturing and absorbing sulfur dioxide is pumped by a third pump into a first sprinkler within the sulfur dioxide absorption tower to be sprayed downwards, so as to obtain an ammonium sulfate solution, which is then processed into an ammonium sulfate product; the coal-fired power plant flue gas which has been subjected to sulfur dioxide removal treatment enters the carbon dioxide absorption tower from its bottom, and the dilute aqueous ammonia absorption solution within the dilute aqueous ammonia storage tank capable of capturing and absorbing carbon dioxide is pumped by a fourth pump into a third sprinkler within the carbon dioxide absorption tower to be sprayed downwards, thereby countercurrent contacting the flue gas with the dilute aqueous ammonia absorption solution to allow a gas-liquid two-phase reaction to occur, so as to generate an ammonium bicarbonate solution, which is then processed into an ammonium bicarbonate product, through carbon dioxide absorption.

None of the above-mentioned disclosures explicitly discloses the post-desulfurization process control parameters, nor do they effectively realize the integration of desulfurization and decarbonization.

Furthermore, the typical the process flow is complex, the investment costs are high, and the operating costs are high; the front purification effect affects the end carbon capture effect; the additional value of the product CO₂ is low; and the application of the product CO₂ in some downstream industries is limited.

Therefore, it is desirable to make the post-desulfurization process parameters clear and definite through engineering and technical researches, so as to realize the integration of desulfurization and decarbonization, and develop a method for applying ultra-clean flue gas ammonia-based desulfurization technology in carbon capture process. This may reduce the investment and operating costs of carbon capture devices, make the end process selection be unaffected by the front process, improve the additional value of the product CO₂, and broaden the application area of the product CO₂.

### BRIEF DESCRIPTION OF THE DRAWINGS

The objects and advantages of the invention will be apparent upon consideration of the following detailed description, taken in conjunction with the accompanying drawings, in which like reference characters refer to like parts throughout, and in which:
Figure 1 is a schematic view of an illustrative flow in accordance with the principles of present invention.
Figure 2 are schematic views of an illustrative embodiment of an ultra-clean ammonia-based desulfurization device in accordance with the principles of the invention.

In the drawings, the numbers have the following meaning: 1, absorption tower; 2, oxidation apparatus; 3a, flue gas; 4, concentration section; 5, absorption section; 6, particulate control section; 7, absorption circulation liquid; 8, clean flue gas outlet; 9, flue gas inlet; 10, concentration spraying layer; 11, absorption spraying layer; 12, particulate spraying layer a; 13, particulate spraying layer b; 14, demister; 15, circulation washing solution; 16, first-stage absorption circulation tank; 17, gas-liquid separator a; 18, gas-liquid separator b; 19, gas-liquid dispersion enhancer; 20, carbon capture device; 21, ammonia; 22, oxidation air; 23, process water; 24, ammonium sulfate post-treatment system; 25, second-stage absorption circulation tank; 26, pre-treatment device; 27, inlet CEMS; 28, concentration circulation liquid; 29, washing circulation tank A; and 30, washing circulation tank B.

### DETAILED DESCRIPTION

### DEFINITIONS

"Ammonia-Bearing Liquid" means a liquid comprising at least one ammonia or amine based compound, including but not limited to ammonium salts, ammonium ions (NH4+),ammonium sulfate, ammonium sulfite, and any combination thereof. The liquid may be water.

"Ammonia Slip" means ammonia or one or more ammonia/amine bearing species that escape with the exhaust of the gas flow. The species are derived from ammonia or ammonia/amine bearing species that were added to the gas flow.

"Dust" means a particulate material fine enough to waft along gaseous flows, when handled, processed, or contacted. It includes but is not limited to aerosols, including solid aerosol particles and liquid aerosol particles, soot, charcoal, non-combusted coal, fine minerals, sand, gravel, salts, and any combination thereof.

"Exhaust" means a flow of gas exiting an industrial or chemical process. It includes but is not limited to flue gas, tail gas, exhaust gases from ovens, furnaces, boilers, and/or generators. It may comprise combustion products derived from the combustion of air and flammable material, residual material from chemical processes, which may include water, nitrogen, and pollutants, such as particulate matter, soot, carbon monoxide, nitrogen oxides, and sulfur oxides. The exhaust of one process may be a gaseous input to another process.

"Spray Coverage" is a divergence of spray from a nozzle or an array of nozzles. The greater is the divergence, the greater is the spray coverage.

"Sulfur Oxides or SOx" means a chemical species containing sulfur and oxygen. It includes compounds such as sulfur monoxide (SO), sulfur dioxide (SO₂), sulfur trioxide (SO₃),higher sulfur oxides (SO₃ and SO₄ and polymeric condensates of them), disulfur monoxide(S₂O), disulfur dioxide (S₂O₂), and lower sulfur oxides (S₇O₂, S₆O₂, and SₙOₓ, where n and x are any possible stoichiometric numerical values).

In the event that the above definitions or a description stated elsewhere in this application is inconsistent with a meaning (explicit or implicit) that is commonly used, set forth in a dictionary, or stated in a source incorporated by reference into this application, the application and the claim terms in particular are understood to be construed according to the definition or description in this application, and not according to the common definition, dictionary definition, or the definition that was incorporated by reference. In the event that a claim term can only be understood if it is construed by a dictionary, a definition set forth in the Kirk-Othmer Encyclopedia of Chemical Technology, 5th Edition, 2005, (John Wiley & Sons, Inc.) shall control, if provided therein.

All ranges and parameters disclosed herein are understood to encompass any and all subranges subsumed therein, and every number between the endpoints. For example, a stated range of "1 to 10" should be considered to include any and all subranges between (and inclusive of) the minimum value of 1 and the maximum value of 10; that is, all subranges beginning with a minimum value of 1 or more (e.g. 1 to 6.1), and ending with a maximum value of 10 or less (e.g. 2.3 to 9.4, 3 to 8, 4 to 7), and finally to each number 1, 2, 3, 4, 5, 6, 7, 8, 9, and 10 contained within the range. All percentages, ratios and proportions herein are by weight unless otherwise specified. Unless explicitly stated otherwise, the term "molecular weight" means weight average molecular weight (mw).

Apparatus and methods for ammonia-based desulfurization and decarbonization are provided. The apparatus may include, and the methods may involve, apparatus for ammonia-based desulfurization. The apparatus may include an absorption tower. The apparatus may include an oxidation component. The apparatus may include an absorption circulation system. The apparatus may include a washing circulation system. The absorption tower may include, sequentially, in an upward direction: a concentration section; an absorption section; and a particulate control section. Each of the sections may include several spraying layers. An element that allows only gas to pass may be disposed between the absorption section and the concentration section.

The absorption section may include a first stage. The absorption section may include a second stage. The absorption circulation system may include a first-stage absorption circulation tank connected with an inlet port of the first stage and an outlet port of the first stage to form a first fluid circuit. The absorption circulation system may include a second-stage absorption circulation connected with an inlet port of the second stage and an outlet port of the second stage to form a second fluid circuit. The second fluid circuit being in dependent of the first fluid circuit.

The absorption section may include a first stage. The absorption section may include a second stage. The absorption circulation system may include a first-stage absorption circulation tank connected with an inlet port of the first stage and an outlet port of the first stage to form a first fluid circuit. The absorption circulation system may include a second-stage absorption circulation connected with an inlet port of the second stage and an outlet port of the second stage to form a second fluid circuit. The absorption circulation system may be configured so that there is no fluid conduit outside the absorption tower that: (1) provides fluid communication between the first fluid circuit and the second fluid circuit; and (2) does not entrain mass between the first fluid circuit and the second fluid circuit.

The methods may include methods for controlling sulfur and carbon emissions from flue gas. The methods may include: absorbing sulfur dioxide from the flue gas into an ammonia-bearing liquid; and, after the absorbing, feeding the flue gas directly into a carbon capture device.

The feeding may be a feeding that does not include passing the flue gas to a process such as an alkaline desulfurization process prior to passing the flue gas to the carbon capture device.

The feeding may be a feeding that does not include passing the flue gas to a process such as an electrostatic-demisting process prior to passing the flue gas to the carbon capture device.

The feeding may be a feeding that does not include passing the flue gas to a process such as a sulfuric acid washing-process prior to passing the flue gas to the carbon capture device.

The feeding may include providing the flue gas to the carbon capture device in a state in which the flue gas has a sulfur dioxide concentration no greater than 2 ppm; a dust concentration no greater than 5 mg/Nm³; and an ammonia slip no greater than 3 mg/Nm³.

The flue gas may have an ammonia slip no greater than 1 mg/Nm³.

The flue gas may have a dust concentration no greater than 2 mg/Nm³.

The flue gas may have an ammonia slip no greater than 1 mg/Nm³.

The flue gas may have a sulfur dioxide concentration no greater than 1 ppm.

In the absorbing, the flue gas may include raw material that was not pre-treated before the absorbing.

In the absorbing, the flue gas may include flue gas that was pre-treated before the absorbing.

The methods may include methods for ammonia-based desulfurization of flue gas. The methods may include flowing the flue gas through an absorption tower. The methods may include flowing the flue gas through an oxidation component. The methods may include flowing the flue gas through an absorption circulation system. The methods may include flowing the flue gas through a washing circulation system. The absorption tower may include, sequentially, in an upward direction: a concentration section; an absorption section; and, a particulate control section.

The methods may include spraying on the flue gas, in each of the sections, at several spraying layers, ammonia-bearing liquid. The methods may include preventing liquid from passing downward from the absorption section into the concentration section while allowing gas to pass upward from the concentration section to the absorption section.

The absorption section may include a first stage; and a second stage. The methods may include circulating absorption circulation liquid through a first liquid circuit that includes a first-stage absorption circulation tank connected with an inlet port of the first stage and an outlet port of the first stage. The methods may include circulating absorption circulation liquid through a second liquid circuit that includes a second-stage absorption circulation tank connected with an inlet port of the second stage and an outlet port of the second stage. The circulatings may be arranged so that, in neither the first-stage absorption circulation tank nor the second-stage absorption circulation tank does the absorption circulation liquid of the second fluid circuit mix with the absorption circulation liquid of the first fluid circuit.

The methods may include adding ammonia-bearing absorbent to absorption circulation liquid in the concentration section.

The methods may include adding ammonia-bearing absorbent to absorption circulation liquid in the first-stage absorption circulation tank.

The methods may include adding ammonia-bearing absorbent to absorption circulation liquid in the second-stage absorption circulation tank.

The methods may include adding ammonia-bearing absorbent to absorption circulation liquid in the oxidation component.

The methods may include flowing the flue gas in the absorption tower at a superficial gas velocity in the range 1.5 m/s-3.5 m/s.

The methods may include maintaining a temperature of the concentration section in the range 40°C-75°C.

The methods may include maintaining a temperature of circulation washing solution in the particulate control section in the range 30°C-50°C.

The methods may include maintaining a temperature of circulation washing solution in the particulate control section in the range 30°C-50°C, and maintaining a temperature of the concentration section in the range 40°C-75°C.

The methods may include flowing the flue gas in the absorption tower at a superficial gas velocity in the range 1.5 m/s-3.5 m/s, maintaining a temperature of circulation washing solution in the particulate control section in the range 30°C-50°C, and maintaining a temperature of the concentration section in the range 40°C-75°C.

The methods may include flowing the flue gas in the absorption tower at a superficial gas velocity in the range 1.5 m/s-3.5 m/s, and maintaining a temperature of circulation washing solution in the particulate control section in the range 30°C-50°C.

The methods may include flowing the flue gas in the absorption tower at a superficial gas velocity in the range 1.5 m/s-3.5 m/s, and maintaining a temperature of the concentration section in the range 40°C-75°C.

The methods may include, prior to the absorbing, pre-treating the flue gas. The pre-treating may include removing dust from the flue gas. The pre-treating may include removing a nitrogen oxide from the flue gas. The pre-treating may include partially desulfurizing the flue gas. The pre-treating may include removing a heavy metal from the flue gas. The pre-treating may include removing one or more of the members of the group consisting of: dust, a nitrogen oxide, a sulfur oxide, a heavy metal, and a combination of two or more of the above.

The method may include: prior to the absorbing: (a) pre-treating the flue gas to remove some or all dust, some or all nitrogen oxides and/or some or all heavy metals contained in the flue gas; and (b) cooling the flue gas; and (c) directing the pre-treated flue gas into an ammonia-based desulfurization device to perform the absorbing, the flue gas having a sulfur dioxide concentration and a dust concentration. The methods may include, in the desulfurization device, washing the flue gas with an absorption liquid that includes: ammonium sulfite; and ammonium sulfate; and has a pH in the range 4-6.4. The methods may include, after the washing, performing the feeding to remove carbon dioxide from the flue gas. The washing may reduce the sulfur dioxide concentration to no greater than 2 ppm; and the dust concentration to no greater than 5 mg/Nm³.

The absorbing may include contacting the flue gas with, in order: a concentration circulation liquid, an absorption circulation liquid; and a circulation washing solution. The contacting may include spraying the absorption circulation liquid at a first plurality of levels in the device. At a level of the first plurality, the absorption circulation liquid may contain ammonium sulfite and ammonium sulfate. The contacting may include spraying the circulation washing solution at a second plurality of levels in the device. At a level of the second plurality, the circulation washing solution may contain ammonium sulfite and ammonium sulfate.

The flue gas may define an upstream direction and a downstream direction. The level of the first plurality may be an upstream level. At the upstream level of the first plurality, the absorption circulation liquid may include ammonium sulfite, in the range 0.3-3%, by weight. At the upstream level of the first plurality, the absorption circulation liquid may include ammonium sulfate, in the range 6-36%, by weight. At the upstream level of the first plurality, the absorption circulation liquid may have a pH in the range5-6.4. At a downstream level of the first plurality, downstream of the upstream level, ammonium sulfite content of the absorption circulation liquid may be less than the ammonium sulfite content at the upstream level.

The spraying the absorption circulation liquid at a first plurality of levels may include spraying the absorption circulation liquid at more than one level intermediate the upstream level and the downstream level. The ammonium sulfite content of the absorption circulation liquid dispensed at the upstream level, the more than one intermediate levels and the downstream level may successively decrease in the downstream direction.

The flue gas may define an upstream direction and a downstream direction. The level of the first plurality may be an upstream level. At the upstream level of the first plurality, the absorption circulation liquid may include ammonium sulfite, in the range 0.3-3%, by weight. At the upstream level of the first plurality, the absorption circulation liquid may include ammonium sulfate, in the range 6-36%, by weight. At the upstream level of the first plurality, the absorption circulation liquid may have a pH in the range 5-6.4. At a downstream level of the first plurality, downstream of the upstream level, absorption circulation liquid pH may be less than absorption circulation liquid pH at the upstream level.

At the downstream level of the first plurality, ammonium sulfite content of the absorption circulation liquid may be less than the ammonium sulfite content at the upstream level.

The spraying the absorption circulation liquid at a first plurality of levels may include spraying the absorption circulation liquid at more than one level intermediate the upstream level and the downstream level. The absorption circulation liquid pH at the upstream level, the more than one intermediate levels and the downstream level may successively decrease in the downstream direction. The ammonium sulfite content of the absorption circulation liquid dispensed at the upstream level, the more than one intermediate levels and the downstream level may successively decrease in the downstream direction.

The circulation washing solution at a level of the second plurality may include ammonium sulfite, in the range 0.01-1%, by weight. The circulation washing solution at a level of the second plurality may include ammonium sulfate, in the range 1-38%, by weight. The circulation washing solution at a level of the second plurality may have a pH in the range 3-5.4.

The present inventors have found that carbon capture devices have the highest cost performance when, after ultra-clean ammonia-based desulfurization, the sulfur dioxide concentration is controlled at not greater than 2 ppm and the dust concentration is controlled at not greater than 5 mg/Nm³. Part of the data is shown in Table 1.

**Table 1. Effect of the raw material composition on carbon capture devices**

| Number | Carbon dioxide content in the raw material (%) | Sulfur dioxide concentration in the raw material (ppm) | Dust concentration in the raw material (mg/Nm³) | Loss rate of the absorbent MEA (%) | SO₂ content in the product carbon dioxide (ppm) |
|---|---|---|---|---|---|
| 1 | 12 | 50 | 20 | 18 | 30 |
| 2 | 12 | 20 | 15 | 16 | 26.8 |
| 3 | 12 | 10 | 10 | 10 | 25.3 |
| 4 | 12 | 5 | 5 | 6 | 3.9 |
| 5 | 12 | 2 | 5 | 1 | 0.9 |
| 6 | 12 | 1 | 2 | 0.9 | 0.83 |

As can be seen from Table 1, when the sulfur dioxide concentration is controlled at not greater than 2 ppm and the dust concentration is controlled at not greater than 5 mg/Nm3, the loss rate of the absorbent has dropped to below the target value of 1%, and the SO₂ content in the product carbon dioxide can also meet downstream production requirements, without needing to provide an additional refining unit.

The following are illustrative embodiments are in accordance with the principles of the invention.
1. A method for applying ultra-clean ammonia-based desulfurization technology in carbon capture process, wherein a flue gas having been subjected to ultra-clean ammonia-based desulfurization is directly fed into a carbon capture device for subsequent processing to realize the integration of desulfurization and decarbonization.
2. The method of paragraph 1 wherein, in the flue gas having been subjected to ultra-clean ammonia-based desulfurization, the sulfur dioxide concentration is ≤ 2 ppm, for example, ≤ 1 ppm; the dust concentration is ≤ 5 mg/Nm³, for example, ≤ 2 mg/Nm³; and the ammonia slip is ≤ 3 mg/Nm³, for example, ≤ 1 mg/Nm³.
3. The method of paragraph 1 wherein a sulfur dioxide-containing gas is directly introduced into an ultra-clean ammonia-based desulfurization device to remove sulfur dioxide and then fed into a carbon capture device for subsequent processing, or the sulfur dioxide-containing gas, after having been subjected to pre-treatment, is introduced into the ultra-clean ammonia-based desulfurization device to remove sulfur dioxide, and then the flue gas treated by the ultra-clean ammonia-based desulfurization device is directly fed into the carbon capture device for subsequent processing.
4. The method of paragraph 3 wherein the pre-treatment includes one or more of dust removal, denitrification, desulfurization, and heavy metal removal.
5. The method of paragraph 1 including the steps of:
   A) pre-treating a flue gas stream to remove some or all dust, some or all nitrogen oxides and/or some or all heavy metals contained therein and cooling the flue gas stream to provide a pre-treated flue gas stream;
   B) feeding the pre-treated flue gas stream from step A) into an ultra-clean ammonia-based desulfurization device in which the flue gas stream is washed with an absorption liquid to remove some or allof the SO2 and some or allof the dust contained therein to provide a treated flue gas stream with a sulfur dioxide concentration of ≤ 2 ppm and a dust concentration of ≤ 5 mg/Nm3, wherein the absorption liquid contains ammonium sulfite and ammonium sulfate and has a pH between 4 and 6.4; and
   C) feeding the treated flue gas stream from step B) into a carbon capture device to remove some or allof the carbon dioxide present in the flue gas.
6. The method of paragraph 5 wherein, in step B), the flue gas stream is contacted with a concentration circulation liquid, an absorption circulation liquid and a circulation washing solution successively in order to realize the synergistic control of absorption, oxidation, concentration, and particulate control, wherein the absorption circulation liquid is provided with a number of levels, one or more of which contains ammonium sulfite and ammonium sulfate, and the circulation washing solution is provided with a number of levels, one or more of which contains ammonium sulfite and ammonium sulfate.
7. The method of paragraph 6, wherein one or more level of the absorption circulation liquid includes 0.3-3% by weight ammonium sulfite and 6-36% by weight ammonium sulfate, has a pH value of 5-6.4, and along the flow direction of the flue gas, the ammonium sulfite contents in individual levels of the absorption circulation liquid are successively decreased and/or the pH values of the individual levels of the absorption circulation liquid are successively decreased.
8. The method of paragraph 6, wherein one or more level of the circulation washing solution includes 0.01-1% by weight ammonium sulfite and 1-38% by weight ammonium sulfate and has a pH value of 3-5.4.
9. The method of any one of paragraphs 1 to 8 wherein a device for ultra-clean ammonia-based desulfurization includes an absorption tower, an oxidation apparatus, an absorption circulation apparatus and a washing circulation apparatus, wherein the absorption tower includes a concentration section, an absorption section and a particulate control section arranged sequentially from the bottom to the top, wherein the concentration section, the absorption section and the particulate control section are each provided with several spraying layers, and an apparatus/part which only allows gases to pass through is provided between the absorption section and the concentration section.
10. The method of paragraph 9 wherein the absorption section is provided in two stages and the absorption circulation apparatus is a first-stage absorption circulation tank and a second-stage absorption circulation tank which are respectively connected with the inlet and outlet ports of the absorption section in two stages to form a mutually independent two-stage absorption circulation.
11. The method of paragraph 10 wherein an ammonia-containing absorbent is added from a plurality of points, including the concentration section, the first-stage absorption circulation tank, the second-stage absorption circulation tank, and the oxidation apparatus.
12. The method of paragraph 9, wherein the superficial gas velocity of the absorption tower is 1.5 m/s-3.5 m/s; and/or the operating temperature of the concentration section is 40°C-75°C; and/or the temperature of the circulation washing solution is 30°C -50°C.

The apparatus and methods may include a method for applying ultra-clean ammonia-based desulfurization technology to a carbon capture process, wherein a flue gas having been subjected to ultra-clean ammonia-based desulfurization is directly fed into a carbon capture device for subsequent processing. This method may realize the integration of desulfurization and decarbonization, may significantly reduce the investment and operating costs for carbon capture, and may improve the quality and additional value of the product CO₂ of carbon capture device, and thus may achieve the ultra-clean discharge of the exhausted gases after carbon capture.

In some embodiments, the flue gas, having been subjected to ultra-clean ammonia-based desulfurization with a sulfur dioxide concentration of ≤ 2 ppm and a dust concentration of ≤ 5 mg/Nm³, is directly fed into a carbon capture device for subsequent processing. In some embodiments, in the flue gas having been subjected to ultra-clean ammonia-based desulfurization, the sulfur dioxide concentration is ≤ 2 ppm, for example, ≤ 1 ppm; the dust content is ≤ 5 mg/Nm³, for example, ≤ 2 mg/Nm³; and the ammonia slip is ≤ 3 mg/Nm³, for example, ≤ 1 mg/Nm³. By directly feeding such a flue gas (having been subjected to ultra-clean ammonia-based desulfurization) into a carbon capture device for subsequent processing, investment and operating costs for subsequent carbon may be reduced, and the operational stability may be improved.

Examples of subsequent carbon capture processes in the methods include chemical absorption, physical absorption, adsorption, freezing, compression and condensation, and the like.

In some embodiments, the flue gas may be introduced into an ultra-clean ammonia-based desulfurization device after being pre-treated to remove sulfur dioxide, and then fed into a carbon capture device for subsequent processing. The pre-treatment may include one or more of dust removal, denitrification, desulfurization, and heavy metal removal.

In accordance with the principles of the invention, there is no need to provide an additional gas purification unit between the ammonia-based desulfurization device and the carbon capture device.

In some embodiments, the methods may include one or more of:
A) pre-treating a flue gas stream to remove some or all dust, some or all nitrogen oxides and/or some or all heavy metals contained therein, and cooling the flue gas stream to provide a pre-treated flue gas stream;
B) feeding the pre-treated flue gas stream from step A into an ultra-clean ammonia-based desulfurization device, in which the flue gas stream is washed with an absorption liquid to remove some or all of the SO₂ and some or all of the dust contained therein, to provide a treated flue gas stream with a sulfur dioxide concentration of no greater than 2 ppm and a dust concentration of no greater than 5 mg/Nm³, wherein the absorption liquid contains ammonium sulfite and ammonium sulfate and has a pH between 4 and 6.4; and
C) feeding the treated flue gas stream from step B into a carbon capture device to remove some or all of the carbon the dioxide present in the flue gas.

In some embodiments, in step B, the pre-purified flue gas is contacted with a concentration circulation liquid, an absorption circulation liquid and a particulate washing circulation liquid successively in order to realize the synergistic control of absorption, oxidation, concentration, and particulate control, wherein the absorption circulation liquid is provided with a number of levels, one or more of which contains ammonium sulfite and ammonium sulfate, and the circulation washing solution is provided with a number of levels, one or more of which contains ammonium sulfite and ammonium sulfate.

In some embodiments, one or more level of the absorption circulation liquid may include 0.3-3% ammonium sulfite and 6-36% ammonium sulfate at pH 5-6.4, and along the flow direction of the flue gas, the ammonium sulfite contents in individual levels of the absorption circulation liquid may be successively decreased and/or the pH values of the individual levels of the absorption circulation liquid may be successively decreased.

In some embodiments, one or more level of the circulation washing solution may include 0.01-1% ammonium sulfite and 1-38% ammonium sulfate, and may have a pH of 3-5.4.

In some embodiments, the device for ultra-clean ammonia-based desulfurization may include an absorption tower, an oxidation apparatus, an absorption circulation apparatus and a washing circulation apparatus. The absorption tower may include a concentration section, an absorption section and a particulate control section arranged sequentially from the bottom to the top. Each of the concentration section, the absorption section and the particulate control section may be provided with several spraying layers, and an apparatus/part which only allows gases to pass through may be provided between the absorption section and the concentration section.

In some embodiments, the absorption section may be provided in two stages, and the absorption circulation apparatus may include a first-stage absorption circulation tank and a second-stage absorption circulation tank, which, respectively, may be connected with the inlet and outlet ports of the absorption section in two stages to form a mutually independent two-stage absorption circulation.

In some embodiments, an apparatus/part which only allows gases to pass through may be provided between the absorption section and the particulate control section as appropriate.

In some embodiments, an apparatus/part which only allows gases to pass through may be provided within the absorption section and the particulate control section as appropriate.

In some embodiments, the oxidation apparatus may be configured in a layering or zoning manner according to the solution composition control requirements. The absorption circulation liquid may be oxidized by an oxygen-containing gas in one or more layer/zone of the oxidation apparatus, wherein some or all of the sulfite or bisulfite contained therein may be oxidized to sulfate or bisulfate.

The ammonia-containing absorbent may include one or more of liquid ammonia, aqueous ammonia, and gas ammonia. In some embodiments, the ammonia-containing absorbent may be added from one or a plurality of points, wherein the addition points include the concentration section, the first-stage absorption circulation tank, the second-stage absorption circulation tank, and the oxidation apparatus.

In some embodiments, the process flow of the ultra-clean ammonia-based desulfurization device is as follows:
the flue gas enters from the concentration section, and is cooled and washed by the concentration circulation liquid in the concentration section while increasing the concentration of the concentration circulation liquid or even generating crystals; then, the flue gas is subjected to washing desulfurization by the absorption circulation liquid in the absorption section, and is subjected to particulate removal by the circulation washing solution in the particulate control section, successively, and then is discharged;
the concentration circulation liquid in the concentration section is replenished from the circulation washing solution, and the absorption circulation liquid is replenished by the circulation washing solution and/or the process water;
part of the absorption circulation liquid is oxidized in the oxidation system, and the oxidation liquid is fed to the concentration section, absorption circulation tank, particulate control section through pipelines, respectively;
and the process water is replenished from the particulate control section.

In some embodiments, the superficial gas velocity of flue gas in the absorption tower may be 1.5 m/s-3.5 m/s.

In some embodiments, the operating temperature of the concentration section may be40°C-75°C.

In some embodiments, the temperature of the circulation washing solution may be30°C -50°C.

In some embodiments, the liquid-to-gas ratio in each stage of the absorption section may be greater than or equal to 1 L/m3, the spray coverage may be greater than or equal to 130%, and the total spray coverage in the absorption section may be greater than or equal to 300%.

In some embodiments, the liquid-to-gas ratio in each stage of the particulate control section may be greater than or equal to 0.8 L/m3, the spray coverage may be greater than or equal to 110%, and the total spray coverage in the particulate control section may be greater than or equal to 300%.

In some embodiments, several layers of demisters optionally may be provided in the upper portion of the absorption section and the upper portion of the particulate control section, respectively. The demisters may be selected from corrugated plates, fillers, baffle plates, ridges, screens or a combination thereof.

Apparatus and methods described herein are illustrative. Apparatus and methods in accordance with the invention will now be described in connection with the FIGs, which form a part hereof. The FIGS. show illustrative features of apparatus and method steps in accordance with the principles of the invention. It is to be understood that other embodiments may be utilized and that structural, functional and procedural modifications may be made without departing from the scope and spirit of the present invention.

The steps of the methods may be performed in an order other than the order shown and/or described herein. Embodiments may omit steps shown and/or described in connection with the illustrative methods. Embodiments may include steps that are neither shown nor described in connection with the illustrative methods. Illustrative method steps may be combined. For example, one illustrative method may include steps shown in connection with another illustrative method.

Some apparatus may omit features shown and/or described in connection with illustrative apparatus. Embodiments may include features that are neither shown nor described in connection with the illustrative methods. Features of illustrative apparatus may be combined. For example, one illustrative embodiment may include features shown in connection with another illustrative embodiment.

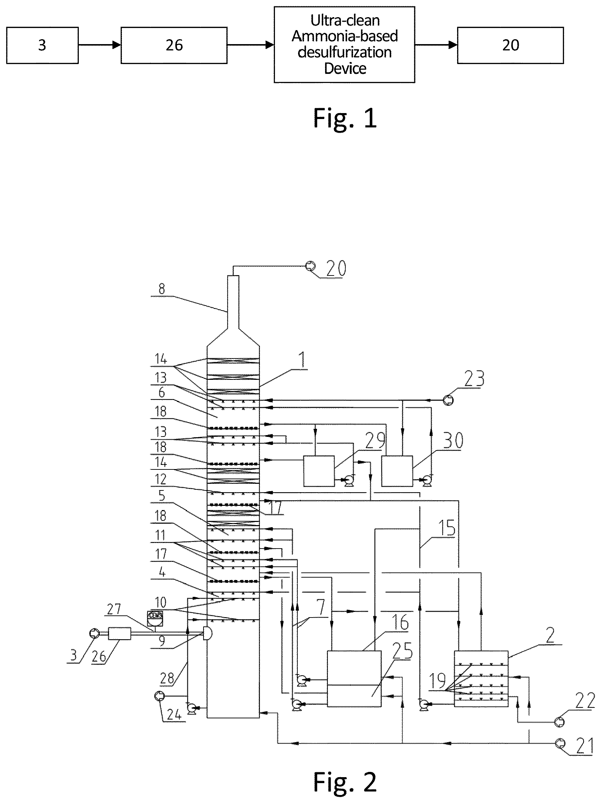

The apparatus and methods are now described in connection with Figures 1 and 2. As shown in Figure 1, flue gas 3 may be subjected to cooling, denitrification and dust removal by a pre-treatment unit 26 and then may enter an ultra-clean ammonia-based desulfurization device for desulfurization and dust removal therein, and then the treated flue gas may be fed directly into a carbon capture device 20 for subsequent processing.

In particular, as shown in Figure 2, the flue gas 3 may be contacted with a concentration circulation liquid 28, an absorption circulation liquid 7, and a circulation washing solution 15 successively for absorption, oxidation, concentration, and particulate control, wherein the absorption circulation liquid 7 may be provided with two levels, both containing ammonium sulfite and ammonium sulfate, and the circulation washing solution 15 may be provided with four levels, the first three levels containing ammonium sulfite and ammonium sulfate and the last one being process water.

In some embodiments, the first level of the absorption circulation liquid 7 may include about 0.7% ammonium sulfite and about 25% ammonium sulfate, and may have a pH of about 6.3, and the second level of the absorption circulation liquid 7 may include about 0.4% ammonium sulfite and about 25% ammonium sulfate, in terms of composition, and may have a pH of about 5.5.

In some embodiments, the first level of the particulate washing circulation solution 15 may include about 0.1% of ammonium sulfite and about 27% of ammonium sulfate, and may have a pH of about 4.2.

In some embodiments, the ultra-clean ammonia-based desulfurization device may include an absorption tower 1, an oxidation apparatus 2, a first-stage absorption circulation tank 16, a second-stage absorption circulation tank 25, washing circulation tanks A/B (29 and 30), and an ammonium sulfate post-treatment system 24. The absorption tower may include a concentration section 4, an absorption section 5 and a particulate control section 6 arranged sequentially from the bottom to the top. Each of the concentration section 4, the absorption section 5 and the particulate control section 6 may be provided with several spraying layers, and an apparatus/part that only allows gases to pass through may be provided between the absorption section 5 and the concentration section 4. The absorption section may be provided in two stages for absorption. A first-stage absorption circulation tank 16 and a second-stage absorption circulation tank 25 may be respectively connected with the inlet and outlet ports of the two stages of the absorption section to form a mutually independent two-stage absorption circulation. Gas-liquid separators b 18, which only allow gases to pass through, may be provided between a first-stage absorption and a second-stage absorption in the absorption section 5, and between a first-stage spraying and a second-stage spraying, and between a third-stage spraying and a fourth-stage spraying in the particulate control section 6. A gas-liquid separator a 17 which only allows gases to pass through is provided between the absorption section 5 and the particulate control section 6. An ammonia-containing absorbent is added from a plurality of points, including the concentration section 4, the first-stage absorption circulation tank 16, the second-stage absorption circulation tank 25, and the oxidation apparatus 2.

An illustrative process flow of the apparatus is as follows:
the flue gas enters from the concentration section 4 in the absorption tower 1 and is cooled and washed by the concentration circulation liquid 28 in the concentration section 4 while increasing the concentration of the concentration circulation liquid or even generating crystals; then, the flue gas is subjected to washing desulfurization by the absorption circulation liquid 7 in the absorption section 5, and is subjected to particulate removal by the circulation washing solution 15 in the particulate control section 6, successively, and then is discharged;
and the concentration circulation liquid in the concentration section 4 is replenished from the circulation washing solution 15, and the absorption circulation liquid 7 is replenished by the circulation washing solution 15 and/or the process water 23;
part of the absorption circulation liquid 7 is fed from the first-stage absorption circulation tank 16 into the oxidation apparatus 2 for oxidization, and the oxidization liquid is fed to the concentration section 4, the first-stage absorption circulation tank 16, and a particulate washing section 6 through pipelines, respectively;
the process water 23 is replenished from the particulate control section 6;
the superficial gas velocity of the absorption tower 1 is 2.35 m/s; the operating temperature of the concentration section 4 is 50°C -60°C; and the temperature of the circulation washing solution 15 may be 45°C.

The ammonia slip in the clean flue gas may be 0.3 mg/Nm³.

Flue gas cooling may include recovery of waste heat and air cooling.

In the flue gas after ultra-clean ammonia-based desulfurization, the sulfur dioxide content may be less than or equal to 5 mg/Nm³, the dust content may be less than or equal to 4.5 mg/Nm³, and the ammonia slip may be less than or equal to 0.3 mg/Nm³.

The flue gas, after ultra-clean ammonia-based desulfurization, may be directly fed into a subsequent carbon capture treatment process. The carbon capture treatment process may include carburization with an organic amine such as monoethanolamine (MEA).

Compared with a conventional ammonia-based desulfurization + ammonia-based carbon capture device, the investment costs using the apparatus and methods may be reduced by 20%, and the operating costs may be reduced by 15%; and compared with an organic amine desulfurization + organic amine carbon capture device, the investment costs may be reduced by 45%, and the operating costs may be reduced by 11%.

### EXAMPLES

The following example is illustrative.

### Example 1

This example illustrates the use of ultra-clean ammonia-based desulfurization technology in flue gas treatment, and the resulting treated flue gas was directly fed to a carbon capture unit for carbon capture.

In the ultra-clean ammonia-based desulfurization technology, flue gas 3 was subjected to cooling, denitrification, dust removal and heavy metal removal by a pre-treatment unit 26, and desulfurization and dust removal by an ultra-clean ammonia-based desulfurization device, and then was directly fed into an ammonia-based carbon capture device 20 for subsequent processing, where carbon dioxide was absorbed by ammonia to produce ammonium bicarbonate.

The ultra-clean ammonia-based desulfurization apparatus included an absorption tower 1, an oxidation apparatus 2, a first-stage absorption circulation tank 16, a second-stage absorption circulation tank 25, washing circulation tanks A/B (29 and 30), and an ammonium sulfate post-treatment system 24. The absorption tower included a concentration section 4, an absorption section 5 and a particulate control section 6 arranged sequentially from the bottom to the top. The concentration section 4, the absorption section 5 and the particulate control section 6 were respectively provided with 3, 4 and 5 spraying layers, and a gas-liquid separator b 18 which only allowed gases to pass through was provided between the absorption section 5 and the concentration section 4.

The absorption section was provided in two stages for absorption, and the first-stage absorption circulation tank 16 and the second-stage absorption circulation tank 25 were respectively connected with the inlet and outlet ports of the two stages of the absorption section to form a mutually independent two-stage absorption circulation, wherein each stage of the absorption section included two spraying layers.

One gas-liquid separator a 17 covering the entire cross section of the absorption tower was provided within the absorption section 5, and two gas-liquid separators a 17 covering the entire cross section of the absorption tower were provided within the particulate control section 6.

A gas-liquid separator b 18 which only allowed gases to pass through was provided between the absorption section 5 and the particulate control section 6.

The ammonia-containing absorbent was 15% aqueous ammonia, which was added from the concentration section 4, the first-stage absorption circulation tank 16 and the second-stage absorption circulation tank 25, to ensure the quality of the product ammonium sulfate and the absorption efficiency of SO₂.

In the ultra-clean ammonia-based desulfurization apparatus, the pre-treated flue gas was contacted with a concentration circulation liquid 28, an absorption circulation liquid 7, and a circulation washing solution 15 successively, wherein the two levels of the absorption circulation liquid 7 both contained ammonium sulfite and ammonium sulfate, and the circulation washing solution 15 was provided with four levels, the first three levels containing ammonium sulfite and ammonium sulfate, and the last one being process water.

The first level of the absorption circulation liquid 7 included 0.6% ammonium sulfite and 24.3% ammonium sulfate, and had a pH of 5.9, and the second level of the absorption circulation liquid 7 included 0.2% ammonium sulfite and 24.4% ammonium sulfate, and had a pH of 5.3.

The first level of the particulate washing circulation solution 15 included 0.2% ammonium sulfite and 26.3% ammonium sulfate and had a pH of 4.35.

The process flow of the apparatus was as follows:
the flue gas entered from the concentration section 4 in the absorption tower 1 and was cooled and washed by the concentration circulation liquid in the concentration section 4 while increasing the concentration of the concentration circulation liquid and generating crystals in the tower; then, the flue gas was subjected to washing desulfurization by the absorption circulation liquid 7 in the absorption section 5, and was subjected to particulate removal by the circulation washing solution 15 in the particulate control section 6, successively, and then was discharged;
the concentration circulation liquid in the concentration section 4 was replenished from the circulation washing solution 15, and the absorption circulation liquid 7 was replenished by the circulation washing solution 15 and the process water 23;
18% of the first level of the absorption circulation liquid 7 was fed from the first-stage absorption circulation tank 16 into the oxidation apparatus 2 for oxidization, and the oxidation liquid was fed to the concentration section 4, the first-stage absorption circulation tank 16, and the particulate washing section 6 through pipelines at a ratio of 10 : 15 : 75, respectively;
the process water 23 was replenished from the particulate control section 6;
the superficial gas velocity of the absorption tower 1 was 2.22 m/s; the operating temperature of the concentration section 4 was 55°C; and the temperature of the circulation washing solution 15 was 48°C.

An inlet CEMS 27 was provided on the inlet pipeline of the flue gas 3, for monitoring flue gas flow, temperature, pressure, sulfur dioxide content, nitrogen oxides content, water content, and mercury content.

Prior to entering the ultra-clean ammonia-based desulfurization device, the flue gas 3 was fed into a pre-treatment unit 26 for cooling, denitrification, dust removal, heavy metal removal, and the like. Cooling included recovery of waste heat and soft water preheating, the denitrification process was selective catalytic reduction ("SCR") denitrification, the dust removal process was electrostatic dust removal, and the heavy metal removal process was activated carbon adsorption.

### IMPLEMENTATION EFFECTS OF EXAMPLE 1

In the device, the flue gas flow was designed to be 370,000 Nm3/h, the SO₂ concentration was designed to be 3,200 mg/Nm³, and the total dust concentration was designed to be 19.8 mg/Nm³.

During the test, in the clean flue gas, SO₂ is 2.6 mg/Nm³, the total dust (including aerosols) was 0.75 mg/Nm³, and the ammonia slip was 0.27 mg/Nm³.

**Table 2. Device design parameters**

| Number | Process indicator | Unit | Numerical value |
|---|---|---|---|
| 1 | Flue gas flow | Nm³/h | 370,000 |
| 2 | Temperature at the flue gas inlet | °C | 145 |
| 3 | SO₂ concentration in the flue gas | mg/Nm³ | 3,200 |
| 4 | Dust concentration at the flue gas inlet | mg/Nm³ | 19.8 |
| 5 | SO₂ concentration in the flue gas at the outlet | mg/Nm³ | ≤5 |
| 6 | Dust concentration in the flue gas at the outlet | mg/Nm³ | ≤2 |
| 7 | Ammonia slip concentration in the flue gas at the outlet | mg/Nm³ | ≤0.5 |
| 8 | Recovery rate of ammonia | % | ≥ 99 |

Table 3 shows the measurement methods and the measurement instruments.

**Table 3. Measurement method of each indicator and the list of main instruments**

| Number | Monitoring item | Standard name and number of the analytical method | Name and model of the instrument | Instrument No. |
|---|---|---|---|---|
| 1 | Dust and fume | Determination of particulates and sampling methods gaseous pollutants from exhausted gas of stationary source GB/T16157-1996 | Laoying 3012H Dust And Fume Sampler Electronic Balances BS224S, AB204-S | 8042448, 08244496 18360886, & 1119051201 |
| 2 | SO₂ | Determination of sulfur dioxide from exhausted gas of stationary source Fixed-potential electrolysis method HJ/T 57-2000 | Testo 350 flue gas analyzer | 10^{#} & 1^{#} |
| 3 | NO_{X} | Determination of nitrogen oxides from exhausted gas of stationary source Fixed-potential electrolysis method HJ/T 693-2014 | Testo 350 Flue Gas Analyser | 10^{#} & 1^{#} |
| 4 | Ammonia | Ambient air and exhausted gas - Determination of ammonia Nessler 's reagent spectrophotometry HJ 533-2009 | Laoying 3072H 722 Spectrophotometer | 02085809& 2c5BP363 |
| 5 | Oxygen content of the flue gas | Electrochemical method - Specifications and test procedures for continuous emission monitoring systems of flus gas emitted from stationary sources (Appendix B) (HJ/T 76-2007) | Testo 350 Flue Gas Analyzer | 10^{#} & 1^{#} |
| 6 | Flue gas temperature | Platinum resistance method - Determination of particulates and sampling methods of gaseous pollutants from exhausted gas of stationary source (GB/T 16157-1996) | TES-1310 | / |
| 7 | Flue gas humidity | Specifications and test procedures for continuous emission monitoring systems of flus gas emitted from stationary and sources (Appendix B) (HJ/T 76-2007) | Laoying 3012H dust fume sampler | 8042448& 08244496 |
| 8 | Ammonium sulfate | Ammonium sulfate (GB 535-1995) | Conventional laboratory instruments such as analytical balance and pH meter | |

Table 4 shows the operating parameters and the test results.

**Table 4. The operating parameters and test results of the ultra-clean ammonia-based desulfurization device**

| Number | Item | | Unit | Test result | Comments |
|---|---|---|---|---|---|
| 1 | Flue gas flow in the absorption tower | Standard state, wet basis, and actual O₂ | ×10⁴ m³/h | 33.6 | - |
| | | Standard state, dry basis, and 6% O₂ | ×10⁴ m³/h | 30.84 | - |
| 2 | System resistance | | Pa | 1684 | - |
| 3 | Original flue gas parameters | SO₂ concentration (standard state, dry basis, and 6% O₂) | mg/Nm³ | 2980 | Mean value during the test |
| | | O₂ (V/V) | % | - | - |
| | | Temperature | °C | 142 | Mean value during he test |
| | | Moisture content (V/V) | % | 8.2 | - |
| | | Dust and fume concentration (standard state, dry basis, and 6% O₂) | mg/Nm³ | 17.9 | - |
| 4 | Clean flue gas parameters | SO₂ concentration (standard state, dry basis, and 6% O₂) | mg/Nm³ | 2.6 | Mean value during he test |
| | | O₂ (V/V) | % | - | - |
| | | Temperature | °C | 48.7 | Mean value during he test |
| | | Moisture content (V/V) | % | 14 | - |
| | | Dust and fume concentration (standard state, dry basis, and 6% O₂) | mg/Nm³ | 0.75 | Including solid particulates and soluble solid particulates |
| | | Slipped free ammonia (standard state, dry basis, and 6% O₂) | mg/Nm³ | 0.27 | - |
| 5 | Desulfurization efficiency of the absorption tower | | % | 99.91 | |
| 6 | Dust removal efficiency of the absorption tower | | % | 95.8 | - |
| 7 | Ammonia consumption (15% aqueous ammonia) | | t/h | 3.255 | |
| 8 | Utilization rate of ammonia | | % | 99.9 | - |
| 9 | Byproduct | Nitrogen | % | 21.17 | |
| | ammonium sulfate | content | | | |
| | | Water content | % | 0.28 | - |
| | | Free acid content | % | 0.1 | - |

Thus, apparatus and methods for capturing carbon in connection with absorption of sulfur dioxide from a flue gas have been provided. Persons skilled in the art will appreciate that the present invention can be practiced by other than the described examples, which are presented for purposes of illustration rather than of limitation. The present invention is limited only by the claims that follow.

## Claims

1. An apparatus for ammonia-based desulfurization comprising:
an absorption tower;
an oxidation component;
an absorption circulation system; and
a washing circulation system;
wherein:
the absorption tower includes, sequentially, in an upward direction:
a concentration section;
an absorption section; and,
a particulate control section;
each of the sections includes several spraying layers; and
an element disposed between the absorption section and the concentration section allows only gas to pass.

2. The apparatus of claim 1 wherein:
the absorption section includes:
a first stage; and
a second stage;
the absorption circulation system includes:
a first-stage absorption circulation tank connected with an inlet port of the first stage and an outlet port of the first stage to form a first fluid circuit; and
a second-stage absorption circulation tank connected with an inlet port of the second stage and an outlet port of the second stage to form a second fluid circuit, the second fluid circuit being independent of the first fluid circuit.

3. The apparatus of claim 1 wherein:
the absorption section includes:
a first stage; and
a second stage;
the absorption circulation system includes:
a first-stage absorption circulation tank connected with an inlet port of the first stage and an outlet port of the first stage to form a first fluid circuit; and
a second-stage absorption circulation tank connected with an inlet port of the second stage and an outlet port of the second stage to form a second fluid circuit; wherein there is no fluid conduit outside the absorption tower that:
provides fluid communication between the first fluid circuit and the second fluid circuit; and
does not entrain mass between the first fluid circuit and the second fluid circuit.

4. A method for ammonia-based desulfurization of flue gas, the method comprising:
flowing the flue gas through:
an absorption tower;
an oxidation component;
an absorption circulation system; and
a washing circulation system;
wherein the absorption tower includes, sequentially, in an upward direction:
a concentration section;
an absorption section; and
a particulate control section;
spraying on the flue gas, in each of the sections, at several spraying layers, ammonia-bearing liquid; and
preventing liquid from passing downward from the absorption section into the concentration section while allowing gas to pass upward from the concentration section to the absorption section.

5. The method of claim 4 further comprising, when the absorption section includes:
a first stage; and
a second stage;
circulating absorption circulation liquid through a first liquid circuit that includes a first-stage absorption circulation tank connected with an inlet port of the first stage and an outlet port of the first stage; and
circulating absorption circulation liquid through a second liquid circuit that includes a second-stage absorption circulation tank connected with an inlet port of the second stage and an outlet port of the second stage;
such that, in neither the first-stage absorption circulation tank nor the second-stage absorption circulation tank does the absorption circulation liquid of the second fluid circuit mix with the absorption circulation liquid of the first fluid circuit.

6. The method of claim 5 further comprising adding ammonia-bearing absorbent to one or more of: absorption circulation liquid in the concentration section; absorption circulation liquid in the first-stage absorption circulation tank; absorption circulation liquid in the second-stage absorption circulation tank; and absorption circulation liquid in the oxidation component.

7. The method of claim 4 further comprising flowing the flue gas in the absorption tower at a superficial gas velocity in the range 1.5 m/s-3.5 m/s.

8. The method of claim 7 further comprising maintaining a temperature of the concentration section in the range 40°C-75°C.

9. The method of claim 7 or 8 further comprising maintaining a temperature of circulation washing solution in the particulate control section in the range 30°C-50°C.

10. The method of claim 4 further comprising maintaining a temperature of the concentration section in the range 40°C-75°C.

11. The method of claim 4 or 10 further comprising maintaining a temperature of circulation washing solution in the particulate control section in the range 30°C-50°C.

12. A method for controlling sulfur and carbon emissions from flue gas, the method comprising:
absorbing sulfur dioxide from the flue gas into an ammonia-bearing liquid; and,
after the absorbing, feeding the flue gas directly into a carbon capture device.

13. The method of claim 12wherein the feeding does not include passing the flue gas to a process such as an alkaline desulfurization process, an electrostatic-demisting process or a sulfuric acid washing-process prior to passing the flue gas to the carbon capture device.

14. The method of claim 12 wherein:
the feeding includes providing the flue gas to the carbon capture device in a state in which the flue gas has:
a sulfur dioxide concentration no greater than 2 ppm;
a dust concentration no greater than 5 mg/Nm³; and
an ammonia slip no greater than 3 mg/Nm³.

15. The method of claim 14 wherein the flue gas has an ammonia slip no greater than 1 mg/Nm³.

16. The method of claim 14 or 15 wherein the flue gas has a dust concentration no greater than 2 mg/Nm³.

17. The method of claim 14, 15 or 16 wherein the flue gas has a sulfur dioxide concentration no greater than 1 ppm.

18. The method of claim 12 wherein, in the absorbing, the flue gas is raw material that was/was not pre-treated before the absorbing.

19. The method of claim 12further comprising, prior to the absorbing, pre-treating the flue gas.

20. The method of claim 19 wherein the pre-treating includes removing one or more of the members of the group consisting of:
dust,
a nitrogen oxide,
a sulfur oxide,
a heavy metal, and
a combination of two or more of the above.

21. The method of claim 12 further comprising:
prior to the absorbing:
pre-treating the flue gas;
cooling the flue gas; and
directing the pre-treated flue gas into an ammonia-based desulfurization device to perform the absorbing, the flue gas having a sulfur dioxide concentration and a dust concentration;
in the desulfurization device, washing the flue gas with an absorption liquid that:
includes:
ammonium sulfite; and
ammonium sulfate; and
has a pH in the range 4-6.4; and
after the washing, performing the feeding to remove carbon dioxide from the flue gas;
wherein the washing reduces:
the sulfur dioxide concentration to no greater than 2 ppm; and
the dust concentration to no greater than 5 mg/Nm³.

22. The method of claim 21wherein the pretreating includes removing one or more of the members of the group consisting of:
dust,
a nitrogen oxide,
a sulfur oxide,
a heavy metal, and
a combination of two or more of the above,
contained in the flue gas.

23. The method of claim 21 wherein the absorbing includes contacting the flue gas with, in order:
a concentration circulation liquid,
an absorption circulation liquid; and
a circulation washing solution;
wherein the contacting includes spraying:
the absorption circulation liquid at a first plurality of levels in the device, wherein, at a level of the first plurality, the absorption circulation liquid contains ammonium sulfite and ammonium sulfate, and
the circulation washing solution at a second plurality of levels in the device, wherein, at a level of the second plurality, the circulation washing solution containing ammonium sulfite and ammonium sulfate.

24. The method of claim 23wherein:
the flue gas defines an upstream direction and a downstream direction;
the level of the first plurality is an upstream level;
at the upstream level of the first plurality, the absorption circulation liquid:
includes:
ammonium sulfite, in the range 0.3-3%, by weight; and
ammonium sulfate, in the range 6-36%, by weight; and
has a pH in the range5-6.4; and,
at a downstream level of the first plurality, downstream of the upstream level, ammonium sulfite content of the absorption circulation liquid is less than the ammonium sulfite content at the upstream level.

25. The method of claim 23 wherein:
the spraying the absorption circulation liquid at a first plurality of levels includes spraying the absorption circulation liquid at more than one level intermediate an upstream level and a downstream level; and
ammonium sulfite content of the absorption circulation liquid dispensed at the upstream level, the more than one intermediate levels and the downstream level successively decreases in the downstream direction.

26. The method of claim 23 wherein:
the flue gas defines an upstream direction and a downstream direction;
the level of the first plurality is an upstream level;
at the upstream level of the first plurality the absorption circulation liquid:
includes:
ammonium sulfite, in the range 0.3-3%, by weight; and
ammonium sulfate, in the range 6-36%, by weight; and
has a pH in the range 5-6.4; and,
at a downstream level of the first plurality, downstream of the upstream level, absorption circulation liquid pH is less than absorption circulation liquid pH at the upstream level.

27. The method of claim 26 wherein at the downstream level of the first plurality, ammonium sulfite content of the absorption circulation liquid is less than the ammonium sulfite content at the upstream level.

28. The method of claim 26 wherein:
the spraying the absorption circulation liquid at a first plurality of levels includes spraying the absorption circulation liquid at more than one level intermediate the upstream level and the downstream level; and
absorption circulation liquid pH at the upstream level, the more than one intermediate levels and the downstream level successively decreases in the downstream direction.

29. The method of claim 28 wherein ammonium sulfite content of the absorption circulation liquid dispensed at the upstream level, the more than one intermediate levels and the downstream level successively decreases in the downstream direction.

30. The method of claim 23 wherein circulation washing solution at a level of the second plurality:
includes:
ammonium sulfite, in the range 0.01-1%, by weight; and
ammonium sulfate, in the range 1-38%, by weight; and
has a pH in the range of 3-5.4.
